# EUROPÄISCHE PATENTSCHRIFT

(11) **EP 3 030 373 B1**
(45) Veröffentlichungstag und Bekanntmachung des Hinweises auf die Patenterteilung: **11.10.2017**
(21) Anmeldenummer: 14747964.6
(22) Anmeldetag: 07.08.2014
(51) Int. Cl.: B23K 11/00, B23K 11/11, B23K 11/16, B23K 11/34

(54) **VERFAHREN UND VORRICHTUNG ZUM WIDERSTANDSSCHWEISSEN VON SANDWICHBLECHEN**
METHOD AND DEVICE FOR RESISTANCE WELDING OF SANDWICH-TYPE PLATES
PROCÉDÉ ET DISPOSITIF DE SOUDAGE PAR RÉSISTANCE DE TÔLES SANDWICH

(30) Priorität: 08.08.2013 DE 102013108563
(43) Veröffentlichungstag der Anmeldung: 15.06.2016
(73) Patentinhaber: ThyssenKrupp Steel Europe AG, 47166 Duisburg (DE)
(72) Erfinder: CHERGUI, Azeddine, 44139 Dortmund (DE)
(74) Vertreter: thyssenkrupp Intellectual Property GmbH
(86) Internationale Anmeldenummer: PCT/EP2014/067041
(87) Internationale Veröffentlichungsnummer: WO 2015/018916

(56) Entgegenhaltungen:
- DE-A1-102011 109 708
- JP-A- S6 281 276
- JP-A- S61 115 687
- JP-A- 2008 272 825
- US-A- 5 866 868

## Beschreibung

Die Erfindung betrifft ein Verfahren zum Widerstandsschweißen eines Sandwichblechs mit mindestens einem weiteren metallischen Bauteil, und eine Vorrichtung zum Widerstandsschweißen von Sandwichblechen mit einem weiteren metallischen Bauteil gemäß dem Oberbegriff der Ansprüche 1 und 5 (siehe, z.B., JP S61 115687 A). Die steigende Nachfrage nach Leichtbaukonzepten im Kraftfahrzeugbereich rückt die Verwendung von Sandwichblechen, welche zwischen zwei metallischen dünnen Deckschichten eine thermoplastische Kunststoffschicht aufweisen, in den Vordergrund, um unter Verwendung von Sandwichblechen die Gewichtseinsparungspotentiale im Kraftfahrzeugbau weiter zu vergrößern. Sandwichbleche können verschiedene, sich ausschließende Eigenschaften bereitstellen, welche neue Gewichtseinsparpotentiale eröffnen. So weisen Sandwichbleche aufgrund der Kunststoffschicht ein deutlich geringeres Gewicht als Vollbleche auf und stellen gleichzeitig hohe Festigkeitswerte zur Verfügung. Darüber hinaus sind die Sandwichbleche schalldämpfend und bieten eine hohe Steifigkeit. Nachteilig bei Sandwichblechen ist allerdings, dass diese eine elektrisch isolierende Kunststoffschicht aufweisen, welche bei Schmelzschweißverfahren Probleme in Bezug auf die Ausbildung einer einwandfreien Schweißverbindung verursacht. Aufgrund der mangelnden Eignung der Sandwichbleche für das Verschweißen, beispielsweise für ein Widerstandsschweißen mit anderen metallischen Bauteilen, werden Sandwichbleche daher häufig verklebt oder mechanisch miteinander gefügt.

Aus der deutschen Offenlegungsschrift DE 10 2011 109 708 A1 ist ein Verfahren zum Fügen eines Sandwichblechs mit einem weiteren metallischen Bauteil bekannt, bei welchem die Zwischenschicht im Verbindungsbereich aufgeschmolzen wird und aus dem Verbindungsbereich verdrängt wird, so dass anschließend durch Herstellen eines elektrischen Kontakts zwischen dem Bauelement und den Deckschichten des Sandwichblechs eine Schweißverbindung erzeugt werden kann. Es wird vorgeschlagen, die Erwärmung der Fügebereiche durch temperierbare Elektroden oder Presselemente durchzuführen. Die Schweißelektroden oder Presselemente sind hierzu beispielsweise mit Heizelementen versehen. Der Aufbau der Schweißelektroden wird damit relativ kompliziert. Darüber hinaus kann die Geschwindigkeit des Erwärmens der thermoplastischen Kunststoffschicht noch weiter gesteigert werden, so dass kürzere Zykluszeiten erreicht werden können.

Aus der US-Patentschrift US 4,650,951 ist darüber hinaus ein Verfahren zum Widerstandsschweißen zweier Verbundbleche bekannt, welches zwei Schweißelektroden verwendet, die beheizt sind und so die zwischen den Deckschichten liegende Kunststoffschicht erwärmen und verdrängen, bevor das eigentliche Verschweißen beginnt.

Hiervon ausgehend ist es Aufgabe der vorliegenden Erfindung, ein einfaches Verfahren zum Widerstandsschweißen von Sandwichblechen sowie eine entsprechende Vorrichtung zur Verfügung zu stellen, mit welcher mit kurzen Zykluszeiten eine Fügestelle eines Sandwichblechs mit einem weiteren Bauteil bereitgestellt werden kann.

Die genannte Aufgabe wird nach einer ersten Lehre der vorliegenden Erfindung durch die Merkmale des Anspruchs 1 gelöst.

Es hat sich herausgestellt, dass bei der Verwendung eines zweiten Stromkreises, welcher Strom über die zweite Schweißelektrode im Schweißbereich über das Bauteil führt, auf einfache Weise eine Erwärmung des Schweißbereichs erzielt werden kann, welche zudem variabel über die Stromstärke des Vorwärmstroms eingestellt werden kann. Die Zykluszeiten können durch die Verwendung des zweiten Stromkreises verringert werden, so dass ein insgesamt wirtschaftlicheres Verfahren bereitgestellt werden kann. Darüber hinaus können konventionelle Schweißelektroden in beispielsweise Widerstandsschweißvorrichtungen bzw. in Widerstandsschweißzangen verwendet werden. Erfindungsgemäß wird während des Schweißens gemäß einer weiteren Ausgestaltung des Verfahrens eine Widerstandsmessung durchgeführt, wobei der elektrische Widerstand zwischen den beiden metallischen Deckschichten des Sandwichblechs gemessen wird. Durch die Messung des Widerstands zwischen den metallischen Deckschichten des Leichtblechs kann beispielsweise festgestellt werden, wann die metallischen Deckschichten metallischen Kontakt aufweisen und der elektrische Widerstand abrupt sinkt. Des Weiteren wird der Strom in dem ersten und/oder im zweiten Stromkreis abhängig von der Widerstandsmessung gesteuert. Beispielsweise können die Ströme der beiden Stromkreise derart gesteuert werden, dass beim Abfall des Widerstands im zweiten Stromkreis auf nahezu null, also bei Kontakt der beiden metallischen Decksichten miteinander, der Stromkreis des zweiten Stromkreises, welcher zur Vorwärmung verwendet wird, unterbrochen wird und der erste Stromkreis, welcher für die Ausbildung der Widerstandsschweißstelle verwendet wird, geschlossen wird. Der zeitliche Verlauf des Schweißstromes bzw. des Vorwärmstroms kann ebenfalls abhängig von der Widerstandsmessung gesteuert werden. Eine Optimierung des Verfahrens im Hinblick auf eine möglichst kurze Zykluszeit kann somit durch die Widerstandsmessung herbeigeführt werden.

Gemäß einer ersten Ausgestaltung des Verfahrens werden die Deckschichten des Sandwichblechs durch Kraftbeaufschlagung der ersten und zweiten Schweißelektrode zusammengedrückt. Hierdurch wird erreicht, dass das erfindungsgemäße Verfahren auf einfache Weise durch einen Schweißroboter mit entsprechend ausgebildeten Mitteln zur Kraftbeaufschlagung der Schweißelektroden durchgeführt werden kann. Beispielsweise können die Schweißelektroden Teil einer Schweißzange sein, beispielsweise einer Punktschweißzange.

Gemäß einer weiteren Ausgestaltung des Verfahrens wird der zweite Stromkreis während des Schweißvorgangs unterbrochen. Hierdurch wird die Gefahr von Sekundärströmen zwischen den Stromquellen des ersten und zweiten Stromkreises über das Bauteil und Sandwichblech verhindert. Die oben genannte Aufgabe wird nach einer zweiten Lehre der vorliegenden Erfindung durch die Merkmale des Anspruchs 5 gelöst. Wie bereits zuvor ausgeführt, führt die Verwendung eines zweiten Stromkreises dazu, dass der Schweißbereich mit einfachen Mitteln und in sehr kurzer Zeit derart erwärmt werden kann, dass die Kunststoffschicht des Sandwichblechs erweicht und aus dem Schweißbereich verdrängt werden kann. Der Kontaktbereich der zweiten Schweißelektrode mit dem Bauteil kann beispielsweise eine geringe Kontaktfläche aufweisen, so dass örtlich im Kontaktbereich der zweiten Schweißelektrode mit dem Bauteil eine hohe Stromdichte erzeugt wird, welche zu einer schnellen Erwärmung des Kontakt- bzw. Schweißbereichs inklusive der Kunststoffschicht des Sandwichblechs in diesem Bereich führt.

Vorzugsweise ist als Mittel zur Verdrängung der Kunststoffschicht des Sandwichblechs die erste Schweißelektrode vorgesehen, wobei die erste Schweißelektrode mit einer Kraft zur Verdrängung der Kunststoffschicht des Sandwichblechs beaufschlagt werden kann.

Vorzugsweise ist die die Vorrichtung als Schweißzange ausgebildet, so dass diese beispielsweise von einem Schweißroboter zum automatischen Fügen der Sandwichbleche verwendet werden kann.

Bevorzugt ist eine Steuerung vorgesehen, mit welcher zumindest zeitweise ein konstanter Stromfluss im ersten und/oder im zweiten Stromkreis erzeugt werden kann. Sowohl der Vorwärmprozess als auch das eigentliche Widerstandsschweißen kann durch die Einstellung eines konstanten, maximalen Stromes, besonders einfach kontrolliert und reproduzierbar durchgeführt werden.

Ist die Strombrücke gemäß einer weiteren Ausgestaltung der Vorrichtung als Kontaktelektrode ausgebildet ist, welche mit dem metallischen Bauteil in Kontakt steht, kann diese auf einfache Weise, beispielsweise durch Anpressen gegen das metallische Bauteil in Kontakt mit dem metallischen Bauteil gebracht werden und den Stromkreis für den Vorwärmstrom bereitstellen.

Vorzugsweise ist zur Positionierung der Strombrücke ein Handlingsystem, Portalsystem oder Roboter zur Positionierung vorgesehen, so dass eine beliebige Position der Strombrücke am metallischen Bauteil, insbesondere im Zusammenhang mit der gegebenen Schweißposition genutzt werden kann, um einen möglichst kurzen Strompfad für den Vorwärmstrom zu realisieren.

Besonders einfach erfolgt eine Positionierung nahe der mit dem metallischen Bauteil in Kontakt stehenden Schweißelektrode gemäß einer weiteren Ausgestaltung der Vorrichtung dadurch, dass die als Kontaktelektrode ausgebildete Strombrücke in festem Abstand zur zweiten Schweißelektrode angeordnet ist und vorzugsweise mit dieser mechanisch fest verbunden ist. Beispielsweise wird dann bei Positionierung der Schweißelektrode am Bauteil automatisch die Kontaktelektrode am Bauteil positioniert.

Im Weiteren soll die Erfindung anhand von Ausführungsbeispielen in Verbindung mit der Zeichnung näher erläutert werden. Die Zeichnung zeigt in
- Fig. 1: in einer schematischen Schnittdarstellung ein erstes Ausführungsbeispiel einer Vorrichtung zum Widerstandsschweißen von Sandwichblechen mit metallischen Bauteilen,
- Fig. 2a bis 2c: ein weiteres Ausführungsbeispiel einer Vorrichtung in schematischer Schnittdarstellung zu drei verschiedenen Zeitpunkten des erfindungsgemäßen Verfahrens,
- Fig. 3: in einem schematischen Diagramm den zeitlichen Verlauf der Ströme gemäß einem weiteren Ausführungsbeispiel des Verfahrens,
- Fig. 4 und 5: in einer schematischen Schnittdarstellung zwei weitere Ausführungsbeispiele von Vorrichtungen zum Widerstandsschweißen von Sandwichblechen mit metallischen Bauteilen.

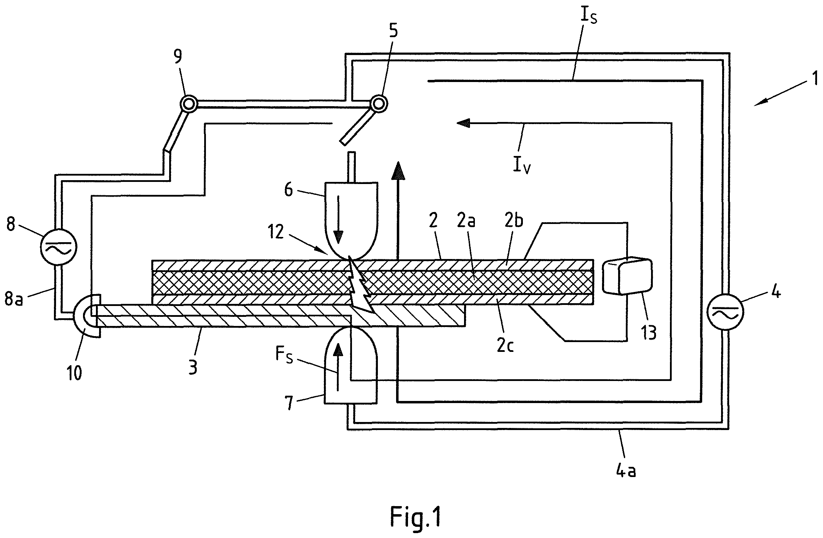

Fig. 1 zeigt zunächst ein Ausführungsbeispiel einer erfindungsgemäßen Vorrichtung 1 zum Widerstandsschweißen eines Sandwichblechs 2 mit einem weiteren metallischen Bauteil 3, vorliegend einem Bauteil aus Vollmaterial. Darüber hinaus weist die Vorrichtung 1 Mittel 4, 5 zur Bereitstellung eines ersten Stromkreises, welcher den Schweißstrom über die Elektroden 6 und 7 führt. Die Mittel bestehen beispielsweise aus einer Spannungs- bzw. Stromquelle 4, den zugehörigen elektrischen Leitungen 4a sowie einem Schalter 5 zum Unterbrechen des ersten Stromkreises. Darüber hinaus sind Mittel zum Verdrängen der Kunststoffschicht des Leichtblechs aus dem zu schweißenden Bereich des Leichtblechs in Form der Schweißelektrode 6 vorgesehen. Nicht dargestellt in Fig. 1 sind Mittel zum Beaufschlagen der Schweißelektrode 6 mit einer Kraft in Richtung des Verbindungspartners 3, in Fig. 1 mit einem Pfeil angedeutet, so dass beim Erweichen der Kunststoffschicht zwischen den beiden Schweißelektroden 6, 7 die Kunststoffschicht aus dem Schweißbereich zwischen beiden Schweißelektroden 6, 7 verdrängt werden kann. Darüber hinaus sind Mittel zur Bereitstellung mindestens eines zweiten Stromkreises, nämlich eine Spannungsquelle bzw. Stromquelle 8 mit den zugehörigen stromführenden Leitungen 8a sowie einem Schalter 9, über welchen der zweite Stromkreis über die zweite Schweißelektrode 7 und einen elektrischen Kontakt in Form einer Strombrücke 10 über das Bauteil 3 geschlossen werden kann, vorhanden.

In Fig. 1 sind die beiden Stromkreise mit Iᵥ für den Vorwärmstromkreis und Iₛ für den Schweißstromkreis gekennzeichnet. Durch die Verwendung des Vorwärmstromkreises Iᵥ wird der Schweißbereich 12 durch Stromfluss im Kontaktbereich der Schweißelektrode mit dem Bauteil 3 so stark erwärmt, dass die Kunststoffschicht 2a, welche zwischen den metallischen Deckschichten 2b des Sandwichblechs 2 angeordnet ist, erwärmt wird und erweicht. Durch Kraftausüben über die Schweißelektroden 6, 7 auf den Schweißbereich 12 wird der Kunststoff aus dem Schweißbereich 12 verdrängt. Es entsteht ein im Wesentlichen rein metallischer Kontakt zwischen den metallischen Deckschichten 2b und 2c.

Sobald der metallische Kontakt hergestellt ist, kann der Stromkreis für den Schweißstrom Iₛ geschlossen werden, so dass der Schweißstrom über die Strom- bzw. Spannungsquelle 4 bereitgestellt wird. Durch den Schweißstrom werden die metallischen Deckschichten 2b, 2c mit dem Bauteil 3 widerstandsgeschweißt. Vorzugsweise kann beim Einschalten des Schweißstroms der Vorwärmstromkreis wieder unterbrochen werden. Zusätzlich sind gemäß der Erfindung Mittel 13 zur Widerstandsmessung zwischen den metallischen Deckschichten 2b, 2c vorgesehen, über welche vorzugsweise der Schweißstrom I_{S} beziehungsweise der Vorwärmstrom I_{V} gesteuert werden kann. Beispielsweise kann der Vorwärmstrom I_{V} bei Abfall des elektrischen Widerstands ausgeschaltet werden und der Schweißstrom I_{S} eingeschaltet werden. Hierdurch können sehr geringe Zykluszeiten und ein optimaler Zeitpunkt zum Einschalten des Schweißstroms gewährleistet werden.

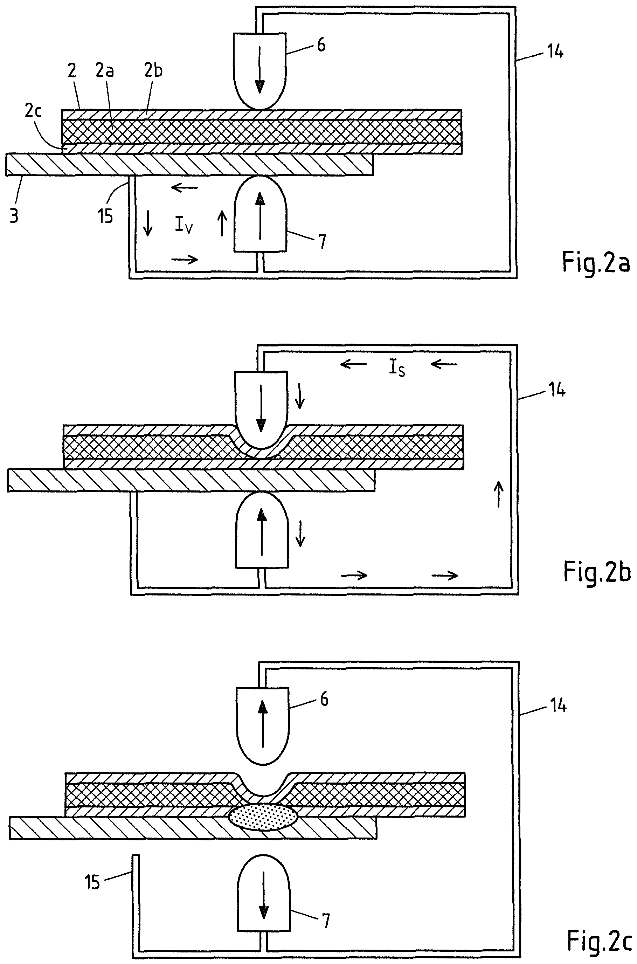

Fig. 2a, 2b und 2c zeigen schematisch ein als Schweißzange 14 ausgebildetes Ausführungsbeispiel der erfindungsgemäßen Vorrichtung zu drei verschiedenen Zeitpunkten während der Durchführung eines des erfindungsgemäßen Verfahrens. In Fig. 2a ist die Schweißzange 14 gezeigt, wobei die Elektroden 6, 7 der Schweißzange 14 sowie eine Strombrücke 15 gegen das Sandwichblech 2 respektive gegen das Bauteil 3 gepresst werden. Wie in Fig. 2a angedeutet, ist zunächst nur der Vorwärmstrom I_{V}, welcher zwischen der Strombrücke 15 und der Schweißelektrode 7 fließt, eingeschaltet. Dieser führt zur Erwärmung des Schweißbereichs, so dass durch Beaufschlagen der Schweißelektrode 6 mit einer Kraft der Kunststoff aus dem Schweißbereich verdrängt kann. Dies zeigt Fig. 2b. Im weiteren Verlauf wird der erste Stromkreis zum Beginnen des Schweißvorganges geschlossen sowie der zweite Stromkreis zum Vorwärmen unterbrochen. Wie in Fig. 2b angedeutet fließt der Schweißstrom Iₛ. Anschließend wird nach Durchführung des Verschweißens des Leichtblechs 2 mit dem metallischen Bauteil 3 die Schweißzange 14 geöffnet und beispielsweise durch einen nicht dargestellten Roboter zur nächsten Schweißposition geführt.

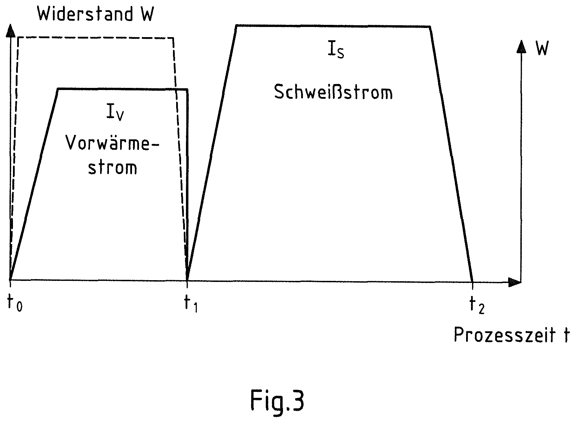

In Fig. 3 ist nun gemäß einem Ausführungsbeispiel in einem Zeit-Strom-Diagramm der zeitliche Verlauf des Vorwärmstroms I_{V} sowie des Schweißstroms I_{S} dargestellt. Darüber hinaus ist auch der Messwert des Widerstandes, welcher über die Mittel zur Widerstandsmessung 13 zwischen den metallischen Deckschichten des Sandwichbleches ermittelt wird, qualitativ dargestellt. Zu Beginn des Schweißverfahrens zum Zeitpunkt t₀ wird ein hoher Widerstand W zwischen den metallischen Deckblechen gemessen und ein Vorwärmstrom I_{V} eingestellt. Im Zeitpunkt t₀ bis t₁ wird darüber hinaus eine Kraft auf die Schweißelektroden 6 und 7 ausgeübt, so dass die Schweißelektrode 6 bei Erweichen des Kunststoffs im Schweißbereich 12 die metallische Deckschicht des Sandwichblechs in Richtung der gegenüberliegenden metallischen Deckschicht drückt, so dass der Kunststoff aus dem Schweißbereich verdrängt wird. In dem Moment, in welchem die metallische Deckschicht 2b Kontakt mit der metallischen Deckschicht 2c hat, sinkt der Widerstand W rapide ab.

Dies kann als Schaltsignal zum Einschalten des Schweißstroms I_{S} verwendet werden. Gleichzeitig kann der Vorwärmstromkreis Iᵥ unterbrochen werden. Anschließend wird der Schweißstrom für eine ausreichende Zeit von t₁ bis t₂ auf einem konstanten Wert gehalten, so dass das Verschweißen kontrolliert ablaufen kann. Mit dem erfindungsgemäßen Verfahren können daher auf einfache Weise Sandwichbleche mit weiteren metallischen Bauteilen verschweißt werden. Als Bauteile werden Bleche, vorzugsweise aus Vollblech aber auch weitere Sandwichbleche verstanden, die als flache oder bereits geformte Teile vorliegen können. Darüber hinaus kann das Verfahren auch durch als Schweißzange ausgebildete erfindungsgemäße Vorrichtung durchgeführt werden, so dass auch Handlingssysteme und Roboter automatische Widerstandsschweißungen von Sandwichblechen vornehmen können.

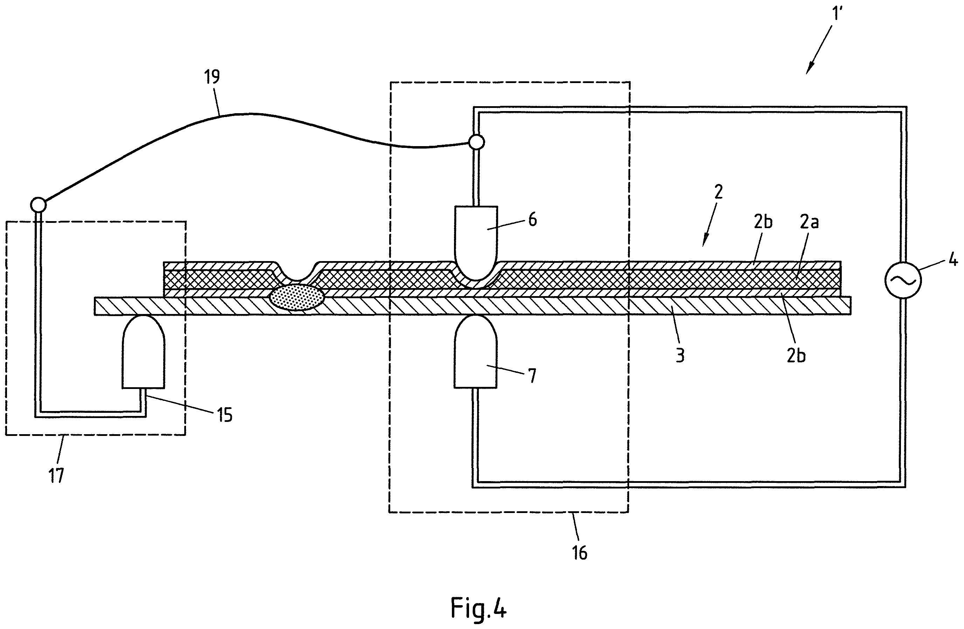

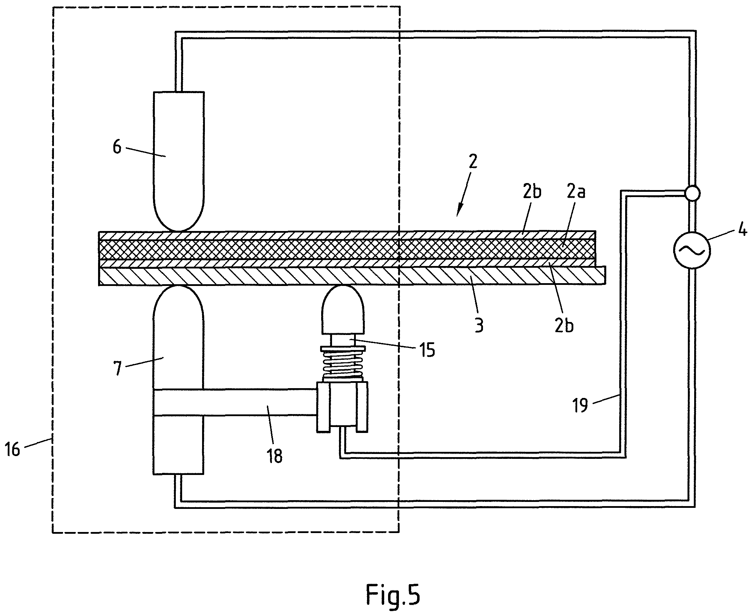

Fig. 4 zeigt in einer schematischen Schnittdarstellung ein weiteres Ausführungsbeispiel einer Vorrichtung 1' zum Widerstandsschweißen eines Sandwichblechs 2, bei welcher die Elektroden 6, 7, die beispielsweise als Teil einer Schweißzange ausgebildeten sein können, über ein erstes Handlingsystem, Portalsystem oder einen Roboter 16 an die jeweilige Schweißposition bewegt werden und die Strombrücke 15, hier ebenfalls als Kontaktelektrode ausgebildet, durch ein zweites Handlingsystem, Portalsystem oder einen zweiten Roboter 17 nachgeführt wird. Die zweite Strombrücke 15 ist über elektrische Leitungen 19 mit der Spannungs- bzw. Stromquelle 4 verbunden und gewährleistet, dass der Vorwärmstromfluss nur durch begrenzte räumliche Bereiche des metallischen Bauteils 3 fließt. Damit kann eine ungewollte Erwärmung von nicht für das Fügen nicht vorgesehenen Bereichen des metallischen Bauteils 3 verhindert werden. Ein weiter vereinfachtes Ausführungsbeispiel zeigt Fig. 5 ebenfalls in einer schematischen Schnittansicht. Die Strombrücke 15 als Nebenschlusselektrode ausgebildet ist und über eine starre, elektrisch isolierende Halterung 18 in einem festen Abstand zur Schweißelektrode 7 angeordnet, so dass ein kurzer Abstand zwischen Nebenschlusselektrode 15 und Schweißelektrode 7 besteht und in dem metallischen Bauteil 3 der entsprechende Vorwärmstrom fließt. Auch die Nebenschlusselektrode 15 ist über elektrische Leitungen 19 mit der Spannungs- bzw. Stromquelle 4 verbunden. Beide Schweißelektroden 6, 7 sowie die Nebenschlusselektrode 15 können beispielsweise über ein Handlingsystem, Portalsystem oder einen Roboter 16 zur Schweißposition geführt werden. Durch den starren Abstand entfällt die Notwendigkeit eines weiteren Handlingsystems oder Roboters, um kurze Strompfade für den Vorwärmstrom zu gewährleisten.

In den Fig. 4 und Fig. 5 dargestellten Ausführungsbeispielen erfolgt gemäß der Erfindung die Widerstandsmessung über die mit dem metallischen Bauteil 3 bzw. mit dem Sandwichblech in Kontakt stehenden Elektroden. Die Mittel zur Widerstandsmessung sind in beiden Figuren jedoch nicht dargestellt.

## Patentansprüche

1. Verfahren zum Widerstandsschweißen eines Sandwichblechs (2) mit mindestens einem weiteren metallischen Bauteil (3), wobei das Sandwichblech (2) zwei metallische Deckschichten (2b, 2c) und eine zwischen den metallischen Deckschichten (2b, 2c) angeordnete thermoplastische Kunststoffschicht (2a) aufweist, bei welchem zumindest der zu schweißende Bereich (12) des Sandwichblechs (2) derart erwärmt wird, dass die thermoplastische Kunststoffschicht (2a) aufweicht und durch Zusammendrücken der Deckschichten (2b, 2c) aus dem Schweißbereich (12) verdrängt wird, die Deckschichten (2b,2c) mit dem weiteren Bauteil (3) durch einen elektrischen Stromfluss in einem ersten Stromkreis über eine erste und zweite Schweißelektrode (6, 7) miteinander verschweißt werden, wobei die zweite Schweißelektrode (7) mit dem metallischen Bauteil (3) Kontakt hat, wobei ein zweiter Stromkreis vorgesehen ist, welcher die zweite Schweißelektrode (7), das mit dem Leichtblech zu verschweißende metallische Bauteil (3) und eine Strombrücke (10, 15) zum Bauteil (3) umfasst, die zweite Schweißelektrode (7) gegenüberliegend der ersten Schweißelektrode (6) auf der vom Sandwichblech (2) abgewandten Seite des Bauteils (3) angeordnet ist und durch einen Stromfluss in dem zweiten Stromkreis zumindest der Kontaktbereich der zweiten Schweißelektrode (7) mit dem Bauteil (3) erwärmt wird,
**dadurch gekennzeichnet, dass**
während des Schweißens eine Widerstandsmessung durchgeführt wird, wobei der elektrische Widerstand zwischen den beiden metallischen Deckschichten (2b, 2c) des Sandwichblechs (2) durchgeführt wird und der Strom in dem ersten und/oder im zweiten Stromkreis zumindest abhängig von der Widerstandsmessung gesteuert wird.

2. Verfahren nach Anspruch 1,
**dadurch gekennzeichnet, dass**
die Deckschichten (2b, 2c) des Sandwichblechs (2) durch Kraftbeaufschlagung der ersten und zweiten Schweißelektrode (6, 7) zusammengedrückt werden.

3. Verfahren nach Anspruch 1 oder 2,
**dadurch gekennzeichnet, dass**
der zweite Stromkreis während des Schweißvorgangs unterbrochen wird.

4. Verfahren nach einem der Ansprüche 1 bis 3,
**dadurch gekennzeichnet, dass**
der Strom des ersten Stromkreises und/oder des zweiten Stromkreises zumindest zeitweise konstant gehalten wird.

5. Vorrichtung (1, 14) zum Widerstandsschweißen von Sandwichblechen (2) mit einem weiteren metallischen Bauteil (3) mit mindestens einer ersten und mindestens einer zweiten Schweißelektrode (6, 7) zur Erzeugung der Schweißverbindung, Mitteln (4, 4a) zur Bereitstellung eines ersten Stromkreises, welche den Schweißstrom zumindest über die erste und die zweite Schweißelektrode (6, 7) führen und Mitteln (6) zur Verdrängung der Kunststoffschicht des Sandwichblechs aus dem zu schweißenden Bereich des Leichtblechs, wobei Mittel (8, 8a) zur Bereitstellung mindestens eines zweiten Stromkreises vorgesehen sind, wobei der zweite Stromkreis zumindest die mit dem Bauteil (3) in Kontakt stehende zweite Schweißelektrode (7), zumindest teilweise das metallische Bauteil (3) und eine Strombrücke (10,15) zum Bauteil umfasst, wobei der Kontaktbereich der zweiten Schweißelektrode (7) mit dem Bauteil (3) so ausgebildet ist, dass dieser durch Stromfluss im zweiten Stromkreis erwärmt werden kann,
**dadurch gekennzeichnet, dass**
Mittel (13) zur Messung des elektrischen Widerstands zwischen den metallischen Deckschichten (2b, 2c) des Sandwichblechs (2) vorgesehen sind und eine Steuerung vorgesehen ist, welche den Stromfluss in dem ersten Stromkreis zumindest abhängig von der Messung des elektrischen Widerstands steuert.

6. Vorrichtung nach Anspruch 5,
**dadurch gekennzeichnet, dass**
als Mittel zur Verdrängung der Kunststoffschicht des Sandwichblechs die erste Schweißelektrode (6) vorgesehen ist und die erste Schweißelektrode (6) mit einer Kraft zur Verdrängung der Kunststoffschicht (2a) des Sandwichblechs (2) beaufschlagt werden kann.

7. Vorrichtung nach Anspruch 6 oder 7,
**dadurch gekennzeichnet, dass**
die Vorrichtung als Schweißzange (14) ausgebildet ist.

8. Vorrichtung nach einem der Ansprüche 5 bis 7,
**dadurch gekennzeichnet, dass**
eine Steuerung vorgesehen ist, mit welcher zumindest zeitweise ein konstanter Stromfluss im ersten und/oder zweiten Stromkreis erzeugt werden kann.

9. Vorrichtung nach einem der Ansprüche 5 bis 8,
**dadurch gekennzeichnet, dass**
die Strombrücke als Kontaktelektrode (15) ausgebildet ist, welche mit dem metallischen Bauteil (3) in Kontakt steht.

10. Vorrichtung nach einem der Ansprüche 5 bis 9,
**dadurch gekennzeichnet, dass**
ein Handlingsystem, Portalsystem oder Roboter zur Positionierung der Strombrücke (10, 15) vorgesehen ist.

11. Vorrichtung nach einem der Ansprüche 5 bis 10,
**dadurch gekennzeichnet, dass**
die als Kontaktelektrode ausgebildete Strombrücke (15) in festem Abstand zur zweiten Schweißelektrode (7) angeordnet ist.

## Claims

1. Method for resistance-welding a sandwich sheet (2) to at least one further metallic component (3), wherein the sandwich sheet (2) has two metallic cover layers (2b, 2c) and a thermoplastic plastics layer (2a) which is disposed between the metallic cover layers (2b, 2c), in which method at least that region (12) of the sandwich sheet (2) that is to be welded is heated in such a manner that the thermoplastic plastics layer (2a) is softened and by compressing the cover layers (2b, 2c) is displaced from the welding region (12), the cover layers (2b, 2c) and the further component (3) being interconnected by an electrical current flow through a first and second welding electrode (6, 7) in a first electrical circuit, wherein the second welding electrode (7) is in contact with the metallic component (3), wherein a second electrical circuit which comprises the second welding electrode (7), the metallic component (3) which is to be welded to the lightweight plate, and a current bridge (10, 15) to the component (3) is provided; that the second welding electrode (7) is disposed so as to be opposite the first welding electrode (6) on that side of the component (3) that faces away from the sandwich sheet (2); and that at least the contact region between the second welding electrode (7) and the component (3) is heated by a current flow in the second electrical circuit, **characterized in that** resistance measuring is carried out during welding, wherein the electrical resistance between the two metallic cover layers (2b, 2c) of the sandwich sheet (2) is carried out and the current in the first and/or in the second electrical circuit is controlled so as to depend at least on resistance measuring.

2. Method according to Claim 1, **characterized in that** the cover layers (2b, 2c) of the sandwich sheet (2) are compressed by force impingement of the first and second welding electrode (6, 7).

3. Method according to Claim 1 or 2, **characterized in that** the second electrical circuit is interrupted during the welding procedure.

4. Method according to one of Claims 1 to 3, **characterized in that** the current of the first electrical circuit and/or of the second electrical circuit is at least occasionally kept constant.

5. Device (1, 14) for resistance-welding sandwich sheets (2) to a further metallic component (3), having at least one first and at least one second welding electrode (6, 7) for generating the welded connection, having means (4, 4a) for providing a first electrical circuit, which direct the welding current at least via the first and the second welding electrodes (6, 7), and having means (6) for displacing the plastics layer of the sandwich sheet from that region of the lightweight sheet that is to be welded, wherein means (8, 8a) for providing at least one second electrical circuit are provided, wherein the second electrical circuit comprises at least the second welding electrode (7) in contact with the component (3), and at least partially the metallic component (3) and an electrical bridge (10, 15) to the component, wherein the contact region between the second welding electrode (7) and the component (3) is configured such that said contact region may be heated by way of the current flow in the second electrical circuit, **characterized in that** means (13) for measuring the electrical resistance between the metallic cover layers (2b, 2c) of the sandwich sheet (2) are provided and a controller which controls the current flow in the first electrical circuit so as to be at least dependent on the measurement of electrical resistance is provided.

6. Device according to Claim 5, **characterized in that** the first welding electrode (6) is provided as a means for displacing the plastics layer of the sandwich sheet, and the first welding electrode (6) for displacing the plastics layer (2a) of the sandwich sheet (2) may be impinged with a force.

7. Device according to Claim 6 or 7, **characterized in that** the device is configured as welding tongs (14).

8. Device according to one of Claims 5 to 7, **characterized in that** a controller by way of which a constant current flow in the first and/or second electrical circuit may at least occasionally be generated is provided.

9. Device according to one of Claims 5 to 8, **characterized in that** the electrical bridge is configured as a contact electrode (15) which is in contact with the metallic component (3).

10. Device according to one of Claims 5 to 9, **characterized in that** a handling system, a gantry system, or a robot is provided for positioning the electrical bridge (10, 15).

11. Device according to one of Claims 5 to 10, **characterized in that** the electrical bridge (15) which is configured as a contact electrode is disposed so as to be fixedly spaced from the second welding electrode (7).

## Revendications

1. Procédé de soudage par résistance d'une tôle sandwich (2) à au moins une autre pièce métallique (3), dans lequel la tôle sandwich (2) comporte deux couches externes métalliques (2b, 2c), et une couche thermoplastique (2a) disposée entre les couches externes métalliques (2b, 2c), dans lequel au moins la zone (12) à souder de la tôle sandwich (2) est chauffée de telle sorte que la couche thermoplastique (2a) se ramollit et est expulsée de la zone de soudage (12) par compression des couches externes (2b, 2c), les couches externes (2b, 2c) sont soudées l'une à l'autre avec l'autre pièce (3) par le passage d'un courant électrique dans un premier circuit électrique par l'intermédiaire d'une première et d'une seconde électrode de soudage (6, 7), dans lequel la seconde électrode de soudage (7) est en contact avec la pièce métallique (3), dans lequel il est prévu un second circuit électrique qui comprend la seconde électrode de soudage (7), la pièce métallique (3) à souder à la tôle légère et un pont électrique (10, 15) conduisant à la pièce (3), la seconde électrode de soudage (7) est disposée à l'opposé de la première électrode de soudage (6) sur la face de la pièce (3) qui est opposée à la tôle sandwich (2) et au moins la zone de contact de la seconde électrode de soudage (7) est chauffée avec la pièce (3) par le passage d'un courant dans le second circuit électrique,
**caractérisé en ce qu'**une mesure de résistance est effectuée pendant le soudage, dans lequel la résistance électrique entre les deux couches métalliques externes (2b, 2c) de la tôle sandwich (2) est mesurée et le courant passant dans le premier et/ou dans le second circuit électrique est commandé au moins en fonction de la mesure de résistance.

2. Procédé selon la revendication 1, **caractérisé en ce que** les couches externes (2b, 2c) de la tôle sandwich (2) sont comprimées l'une contre l'autre en soumettant à une force les première et seconde électrode de soudage (6, 7).

3. Procédé selon la revendication 1 ou 2, **caractérisé en ce que** le second circuit électrique est interrompu pendant le processus de soudage.

4. Procédé selon l'une quelconque des revendications 1 à 3, **caractérisé en ce que** le courant du premier circuit électrique et/ou du second circuit électrique est au moins maintenu constant dans le temps.

5. Dispositif (1, 14) de soudage par résistance de tôles sandwiches (2) à une autre pièce métallique (3), comportant au moins une première et au moins une seconde électrode de soudage (6, 7) destinées à créer la liaison par soudage, des moyens (4, 4a) destinés à fournir un premier circuit électrique, lesquels moyens conduisent le courant de soudage au moins par l'intermédiaire de la première et de la seconde électrode de soudage (6, 7), et des moyens (6) destinés à modifier la couche de matière plastique de la tôle sandwich à partir de la zone à souder de la tôle légère, dans lequel il est prévu des moyens (8, 8a) destinés à fournir au moins un second circuit électrique, dans lequel le second circuit électrique comprend au moins la seconde électrode de soudage (7) en contact avec la pièce (3), au moins partiellement la pièce métallique (3) et un pont électrique (10, 15) conduisant à la pièce, dans lequel la zone de contact de la seconde électrode de soudage (7) est réalisée avec la pièce (3) de manière à ce que celle-ci puisse être chauffée par le passage d'un courant dans le second circuit électrique,
**caractérisé en ce qu'**il est prévu des moyens (13) destinés à mesurer la résistance électrique entre les couches métalliques externes (2b, 2c) de la tôle sandwich (2) et un dispositif de commande qui commande le passage du courant dans le premier circuit électrique au moins en fonction de la mesure de la résistance électrique.

6. Dispositif selon la revendication 5, **caractérisé en ce que** la première électrode de soudage (6) est prévue en tant que moyen destiné à modifier la couche de matière plastique de la tôle sandwich et **en ce que** la première électrode de soudage (6) peut être soumise à une force permettant de modifier la couche de matière plastique (2a) de la tôle sandwich (2).

7. Dispositif selon la revendication 6 ou 7, **caractérisé en ce que** le dispositif est réalisé sous la forme d'une pince de soudage (14).

8. Dispositif selon l'une quelconque des revendications 5 à 7, **caractérisé en ce qu'**il est prévu un dispositif de commande au moyen duquel il est possible de créer au moins par instants le passage d'un courant constant dans le premier et/ou le second circuit électrique.

9. Dispositif selon l'une quelconque des revendications 5 à 8, **caractérisé en ce que** le pont électrique est réalisé sous la forme d'une électrode de contact (15) qui est en contact avec la pièce métallique (3).

10. Dispositif selon l'une quelconque des revendications 5 à 9, **caractérisé en ce qu'**il est prévu un système de manipulation, un système de portique ou un robot destiné à positionner le pont électrique (10, 15).

11. Dispositif selon l'une quelconque des revendications 5 à 10, **caractérisé en ce que** le pont électrique (15) réalisé sous la forme d'une électrode de contact est disposé à une distance fixe de la seconde électrode de soudage (7).
